# EUROPEAN PATENT SPECIFICATION

(11) **EP 1 267 636 B1**
(45) Date of publication and mention of the grant of the patent: **24.05.2006**
(21) Application number: 01940863.2
(22) Date of filing: 21.03.2001
(51) Int. Cl.: A23K 1/18, A23K 1/00

(54) **PET FOOD COMPOSITION AND METHOD OF MANUFACTURE**
HAUSTIERFUTTERZUSAMMENSETZUNG UND VERFAHREN ZU DEREN HERSTELLUNG
COMPOSITION D'ALIMENT POUR ANIMAUX DE COMPAGNIE ET PROCEDE DE PREPARATION ASSOCIE

(30) Priority: 22.03.2000 US 191174 P
(43) Date of publication of application: 02.01.2003
(73) Proprietor: Société des Produits Nestlé S.A., 1800 Vevey (CH)
(72) Inventor: SAYLOCK, Michael, J., Kansas City, MO 64151 (US); DIXON, Dan, St. Joseph, MO 64505 (US)
(74) Representative: Lock, Graham James
(86) International application number: PCT/IB2001/000463
(87) International publication number: WO 2001/070045

(56) References cited:
- EP-A- 0 258 037
- WO-A-00/53031
- US-A- 3 873 736
- US-A- 3 930 031
- US-A- 4 910 038
- US-A- 5 731 029

## Description

This invention relates to a pet food having a moderately-reduced moisture content and a structure that is capable of encouraging chewing action in a pet eating it.

### Background to the invention

Prior pet foods that are chewy are known. These are generally suited for use as treats rather than as complete meals. Although most are moderately wet, with a moisture content of 30% to 50% some are dry, with a moisture content of 10% and below.

There remains, however, a need for a chewy pet food that is suitable both for dogs and for cats and which may be produced without the need for special processing, yet has good visual appeal, is highly palatable and is structured to encourage chewing, while providing a complete meal.

Advantageously, the present invention seeks to address this need.

EP0258037 describes a co-extruded semi-moist food product which comprises an inner core which is at least partially covered by at least one distinguishable layer. US 5731029 describes a process for producing meat-based products on a mass production basis. WO 00/53031 describes a pet treat comprising a sealed container and one or more pieces of a formulated food product in the container, each piece comprising a fried body of a thermally gelled matrix containing protein and starch and having a moisture content of at least about 25% by weight. US 3873736 describes a semi-moist protein food product of meaty and other materials having an elastic texture resembling that of natural meat.

### SUMMARY OF INVENTION

According to a first aspect of the invention, a pet food comprises an edible, formulated, thermally gelled body comprising at least 20% protein by weight having a seared appearance, a moisture content of 20% to 60% by weight, a lipid content of 15% - 25% by weight and a structure providing firmness of texture to be resilient under initial pressure of biting by a pet animal, wherein the body is capable of exuding a fatty juice when subjected to light pressure.

Preferably, this invention provides an edible food body having a biteable and non-uniform surface with high palatability, the palatability being due to a thermally-generated browning/searing reaction.

In an embodiment, the body has an equivalent or nominal diameter of at least 8mm.

Nominal (or equivalent) diameter in this specification means the diameter of a sphere having the same volume as the edible body of the invention.

In a preferred form of the invention, the structure of the body is layered.

In preferred embodiments, the moisture content is from about 35% to 50% by weight and most preferably about 40% to 45% by weight.

The body may comprise from 1% to 10% by weight of ash. An ash content, when present, is preferably from about 4 to 7% by weight.

In preferred embodiments, the body will have a generally blocky shape.

Further according to the invention, the structure comprises an exterior zone and an interior zone, the exterior zone having a lower moisture content than the interior zone. The exterior zone preferably presents a browned outer surface. The browning of the surface may be achieved by exposure thereof to intense dry heat, for example by roasting, grilling, frying or, preferably, hot air drying.

The exterior zone may comprise an acidic coating. The coating may include an edible acid , such as phosphoric acid.

In a preferred form of the invention, the protein content should not exceed 40% by weight.

According to a second aspect of the invention, a process for producing a pet food having a texture so as to be resilient under initial pressure of biting by a pet animal, includes the steps of
- providing a coherent body of food produced from a thermally gellable protein source
- reducing moisture content of the body to between 20 and 50% by weight
- causing at least a portion of the body to have a seared-looking surface
- and reducing the pH of the body,
wherein after reduction of the moisture content the body comprises at least 20% protein by weight

The step of reducing moisture is preferably accomplished by exposing the body to dry heat. The dry heat may be provided by roasting, baking, grilling or frying the body. Preferably the body is hot air dried, in an embodiment, for from about 4 to 7 minutes. Drying temperature may be in the range from about 138°C to 180°C.

The method may include the further step of causing a browning reaction to take place at the surface of the body. This may include the step of reducing the pH of the body. Preferably this includes coating the body with an acid, preferably an edible acid. A suitable edible acid is phosphoric acid.

In a preferred form of the invention, causing the browning reaction includes charring at least a portion of the surface.

Further preferably, charring includes causing reaction of the acid coating with a sugar in the body. The sugar may be present in the constituents of the body prior to formation. Further, the method may include the step of including a sugar in the body. This may be as a coating or an introduced supplementary constituent.

The step of providing the body containing coagulated protein may include the steps of forming a meat emulsion having a protein to fat ratio of at least about 1.5:1 by weight and a moisture content from about 45% to 80%; deaerating the emulsion; comminuting and heating the emulsion; maintaining the heated emulsion at a pressure sufficient to cause the emulsion to coagulate into a coherent body and reducing the pressure. The process may further include dividing the body into a plurality of pieces.

The invention in another aspect provides a pet food product comprising
a sealed container; and
a plurality of edible, formulated, thermally gelled bodies within the container,
said bodies comprising at least 20% protein by weight, having a browned appearance, a moisture content of 20% to 60% by weight, a lipid content of 15%-25% by weight and a structure providing firmness of texture so as to be resilient under initial pressure of biting by a pet animal.

The browned appearance is preferably produced by exposure of the body to a source of heat. The heat is preferably dry heat. The exposure is preferably rapid and the dry heat preferably emanates from roasting, frying or grilling, preferably from hot air drying.

Further preferably, the container includes no added water or gravy and the bodies are tightly contained in the container. Preferably they are closely packed.

Preferably the bodies have elevated fat content so as to be capable of exuding a fatty juice when subjected to light pressure.

In a further preferred form of the invention, the bodies are acidic. They may comprise an acidic coating. Preferably the coating includes an edible acid, such as phosphoric acid.

Further preferably the bodies include sugar, preferably in the coating, so that when they are subjected to heat, a browning reaction takes place at their surfaces.

The container may comprise a sealable can or pouch. The container, once sealed, may be retorted.

### Detailed descrption of embodiments

Embodiments of the invention are now described, by way of example only.

The invention is a pet food product in the form of a coherent formulated food body. The food body is protein-rich, has a reduced moisture content and a structure that has firmness of texture, capable of inducing extended or prolonged chewing. The surface has a non-uniform appearance, exhibiting at least some searing or charring. The surface is resilient and biteable, in the sense that a pet animal may sink its teeth into it without necessarily immediately penetrating it or causing the body to disintegrate. The surface is thus resilient under initial pressure of biting, although it will yield to be parted and give access to the interior of the body.

The body is produced from a thermally gellable protein source, preferably mixed with a starch source, the mixture being caused to gel thermally, then divided into pieces or chunks and thereafter subjected to thermal searing from a source of dry heat.

A plurality of such bodies may be provided in a sealed container. Each such body or piece is coherent, firm and chewable and may be mixed with pieces of differing texture, for example softer, less chewy pieces. The body contains protein in an amount of at least 20%, but preferably no more than 40% by weight, and has a moisture content of in the range from about 20% to 50% by weight. In this form, the body or piece is particularly suited for feeding to a cat or a dog, depending respectively on the final product make-up, as set out more fully below.

The body may optionally include from about 1% to 10% by weight of ash, preferably from 4% to 7% by weight.

The protein, starch and other ingredients may be from any suitable source, the choice thereof being largely determined by nutritional needs, palatability considerations, and the type of food to be produced.

The protein source may be a vegetable protein source, an animal protein source, or a mixture of these protein sources. Suitable vegetable protein sources are gluten, wheat protein, soy protein, rice protein, corn protein, and the like. These proteins may be provided in the form of flours, concentrates and isolates as desired. Animal proteins are however preferred. Suitable animal protein sources are muscular or skeletal meat of mammals, poultry, and fish; meals such as meat meal, bone meal, fishmeal, and poultry meal; by-products such as hearts, liver, kidneys, tongue and the like; and milk proteins.

The starch source is conveniently a grain such as corn, rice, wheat, barley, oats, or soy, and mixtures of these grains. The grain is conveniently provided in the form of a flour. Pure or substantially pure starches may also be used if desired. If flours are used, they will also provide some protein. Hence it is possible to use a material which is both a protein source and a starch source.

Various other ingredients, for example, salt, spices, seasonings, vitamins, minerals, flavoring agents, lipids and the like may also be incorporated into the thermally gellable mixture as desired. If added, the lipids may be any suitable animal fats; for example tallow, or may be vegetable fats.

A water-activity controlling agent may be added to the protein source comprising the initial pre-chunk formulation; so as to soften the texture of the final product and make it more meat-like, while retaining at least some of the available water. Also, the agent provides the product with a measure of protection against microbial infection. Any suitable water activity-controlling agent may be used. Suitable examples include humectants or plasticisers, salts and sugars. Humectants may, for example, be selected from hydrogenated corn syrup, glycerin, propylene glycol, butylene glycol, polyhydric glycols such as glycerol and sorbitol. Suitable sugars include invert sugar, and sucrose. Suitable salts include NaCl and sodium pyrophosphates.

The moisture-reduced, formulated food product is produced by forming a thermally gelled protein-rich mass, dividing the mass into pieces or chunks, and then texturizing them. This latter step includes reducing their moisture content by exposing them to an intense source of dry heat, such as is provided by drying them in a state of relative movement with air, such as a stream of hot air, or by causing them to fall through heated air.

The thermally gelled protein-rich mass may be produced in many different ways as desired.

For example, a thermally gellable mixture may be prepared from water, protein and all the other ingredients to be included in the moisture-reduced, formulated food product. The thermally gellable mixture is then heated and formed into layers. This may be done as described in US patents 4,781,939 and 5,132,137; the disclosures of which are incorporated by reference. As described in these patents, the thermally gellable mixture is fed to an emulsion mill in which the mixture is subjected to rapid mechanical heating and shearing. Any suitable emulsion mill may be used, for example the emulsion mill disclosed in US patent 5,132,137. Other suitable emulsion mills are commercially available under the trade name of Trigonal and may be obtained from Siefer Machinenfabrik GmbH & Co KG, Bahnhofstrasse 114, Postfach 101008, Velbert 1, Germany.

In the emulsion mill, the temperature of the mixture is raised to the desired gelling temperature within a very short time; usually less than one or two seconds. Preferably the temperature is raised to about 100°C to about 120°C. Alternatively, the temperature may be raised to in the range of about 45°C to about 75°C as described in US patent 5,132,137. Usually the mechanical energy generated in the emulsion mill will be sufficient to heat the mixture to the desired temperature but this may be supplemented by the injection of superheated steam.

The heated mixture is ejected from the emulsion mill in a thin stream into a holding tube. Because the heat mixture enters the holding tube in a thin stream, it forms thin layers upon heated mixture already in the holding tube. The layered, heated mixture in the holding tube then gels while moving slowly along the holding tube. Each layer of the layered, heated mixture remains substantially, visually distinct. The residence time of the heated mixture in the holding tube is sufficient for the mixture to gel into a firm, gelled product mass upon reaching the exit of the holding tube. At this stage, the gelled mass has the highly striated appearance and the texture of meat and a moisture content generally in the range from 50% to 60% by mass.

Alternatively, by way of example, the thermally gelled mass may be produced by emulsifying water and the ingredients to be included in the moisture-reduced, formulated food product. A high speed emulsifier or homogenizer is particularly suitable for emulsification. If necessary or desired, a gelling agent may be added. The emulsion is then heated to thermally gel the emulsion to provide a thermally gelled mass; for example in a mixer-cooker, steam oven or extruder. The thermally gelled mass may then be forced through an orifice such as an extrusion die to provide a gelled product suitable for cutting into pieces. Again, moisture content will generally be in the range from 50% to 60% by mass.

The gelled product obtained from whichever of the alternative and non-limiting exemplary processes above is used, is then cut into pieces in a suitable cutter.

The preferred product is from the emulsification process of US 4,781,939 above, because of the layered structure and striations exhibited by the product providing an increased surface area. The pieces are preferably of a size suitable for use in a pet food; for example having a minimum dimension of about 8 mm. The pieces may then be screened to remove fines.

The coherent, protein-rich pieces thus formed are then subjected to a texturisation step. This includes reducing the moisture content of the pieces. A source of intense, dry heat is used. This results in a body having a structure comprising at least two zones - an outer or exterior zone of lower moisture content than an interior zone of higher moisture content.

An example of a dry heat process to reduce moisture of the formed pieces includes frying, preferably in deep fat. Any suitable deep fat frying apparatus may be used. The fat used to fry the pieces may be any suitable animal or vegetable fat or oil. Vegetable oils are preferred. Suitable vegetable oil examples include peanut oil, corn oil, cottonseed oil, sunflower oil, hydrogenated soybean oil and the like. Beef tallow is a suitable animal oil. The temperature of the oil is preferably in the range of about 150°C to about 200°C - for example about 160°C to about 180°C.

The pieces are alternatively, or, in addition, dried in a high velocity hot air dryer for a time sufficient to dry them to a moisture content in the range from about 20% to 60% by weight; preferably from about 30% to about 50% by weight. Most preferably, the range is from 40% to 45% by weight. Drying time should not exceed about 10 minutes; and should preferably be less than about seven minutes, more preferably in the range from 4 to 6 minutes. The temperature range is desirably from about 140°C to 180°C. This has been found to reduce moisture and increase firmness of the body to the desired degree. It will, however, be appreciated that the specific time and temperature needed for any particular product may be determined by a skilled person without undue experimentation.

It is found that the dried bodies produced from layered pieces retain the expanded, layered structure of the undried, layered pieces and, surprisingly, do not noticeably shrink, thus retaining their meat-like appearance.

The dried pieces may also be coated with flavoring agents. Suitable flavoring agents include digests of animal matter, amino acids such as glycine, fats such as tallow, and the like.

Preferably, the pH of the pieces is reduced. Typically the reduction is from a pH in the range from 6.0 to 6.5 down to a value in the range 4.0 to 5.5. The reduction is accomplished by acidifying the pieces, preferably by applying an acidic coating to them. A food grade acid, for example phosphoric acid, is preferably used. In a preferred embodiment, the coating comprises from about 1% to 5% by weight of the coated food body.

Advantageously, the coating may further comprise a sugar, such as sucrose or glucose, for reaction with the acid to provide a highly palatable seared or browning effect in the coating, enhancing the browning that may already have been produced as a result of the moisture reduction step. However, the sugar may in addition or alternatively be included in the initial protein-rich formulation prior to the gelling stage, or be added at any convenient later stage.

The dried pieces, whether or not coated, may then be packed into suitable containers, in particular sealable cans and pouches. In this form, the dried/coated pieces are particularly suited for feeding to pets as a complete meal or part of a meal. Alternatively, the dried/coated pieces may even be fed as treats.

Preferably, the pieces are closely packed in the containers and no additional water or other liquid, such as gravy, is added. Once sealed, the containers may be sterilized by retorting. The heat of sterilization promotes reaction of the acid with sugars in the dried, protein rich body. The result of this reaction is seen in a dark non-uniform surface effect on the pieces, akin to searing or charring.

In preferred embodiments of the invention, the dried pieces preferably comprise about 10% or less by weight of starch; about 20% to about 40% by weight of protein; about 15% to about 25% by weight of lipid; and about 30% to about 40% by weight of moisture. If additional ingredients - in addition to the coating components discussed above - such as salts, sugars, spices, seasonings, flavoring agents, minerals, and the like are included in the dried pieces, these additional ingredients preferably make up about 0.5% to about 15% by weight of the pieces.

An advantage of the invention is that the structure of food body, providing lower moisture and firmer texture - especially at the surface - in a relatively large size chunk, induces the pet, be it cat or dog or the like, to spend more time chewing it, providing beneficial jaw exercise.

In the case of medium to large dogs, it is found that the chunks should preferably be within the following size limits: shortest lateral dimension from 8mm to 12mm and longest from 16mm to about 25mm. It is however, convenient to consider the dimensions in terms of an equivalent or nominal diameter, this being the diameter of a sphere having equal volume to the non-spherical body in question. Although the body may indeed be generally spherical, it is found generally that bodies of generally blocky proportions are preferable. However, not only blocky and rounded shapes, but also shapes comprising combinations thereof are within the scope of this invention and the appended claims.

Of course, particular flavors used will differ depending upon the type of animal intended to consume the food product.

### Example 1

A base mix for producing a thermally gellable mixture is prepared from meat protein, wheat gluten, de-fatted soy flour, other ingredients and water in the following proportions by weight:
69.0% Meats
18.5% Wheat
5.0% Soy Flour
4.5% Water
3.0% Other (minerals, sugars, vitamins, flavors, etc.)

The thermally gellable mixture is run through an emulsion mill (a Trigonal Mill obtained from Siefer Machinenfabrik GmbH & Co KG). The heated mixture leaves the emulsion mill at a temperature of about 112°C and is discharged into a holding tube. The residence time in the holding tube is about 5 minutes. The product leaving the holding tube is in a gelled form and is cut into pieces about 8mm in length. The pieces have a striated, meat-like appearance.

The pieces are sieved to remove fines. The moisture content of the pieces is about 55% by weight. The pieces are then transferred to a deep fat, batch fryer in which they are fried in vegetable oil at a temperature of 188°C for about 30 seconds. The pieces are then removed, allowed to drain in frying baskets, and cooled to ambient temperature. The fried pieces retain the striated, meat-like appearance and have pH of 6.

The composition of the pieces after frying was determined to be as follows (weight %):
35% Protein
20% Fat
37% Moisture
2% sugars, in particular sucrose
6% ash

The fried pieces were then transferred to a coating apparatus. Food grade phosphoric acid and flavoring agents were then coated on the pieces over a time of about 90 seconds, the phosphoric acid making up about 1.5% of the total mass of the coated product pieces. The coated pieces were found to have a moisture content of about 35% by weight and a pH of 5. The coated pieces had a firm yet resilient texture.

Finally, the pieces were packed in to a sealable can without any gravy or water being added. The can was sealed and retorted. After allowing it to cool to ambient temperature, the can was opened and the contents examined.

The fried and coated pieces were observed to have a randomised or at least non-uniform browned surface, appearing more charred than after the earlier pre-canning frying stage. The pieces had a greasy feel and, on being lightly pressed, exuded fatty juices.

### Example 2

A base mix for producing a thermally gellable mixture is prepared from meat protein, wheat gluten, de-fatted soy flour, other ingredients and water in the following proportions by weight:
65.0% Meats
18% Wheat
7.0% Soy Flour
5% Water
3.0% Other (minerals, sugars, vitamins, flavors, etc.)

The thermally gellable mixture is run through an emulsion mill (a Trigonal Mill obtained from Siefer Machinenfabrik GmbH & Co KG). The heated mixture leaves the emulsion mill at a temperature of about 112°C and is discharged into a holding tube. The residence time in the holding tube is about 5 minutes. The product leaving the holding tube is in a gelled form and is cut into pieces about 8mm in length. The pieces have a striated, meat-like appearance.

The pieces are sieved to remove fines. The moisture content of the pieces is about 56% by weight. The pieces are then transferred to a high velocity, hot air dryer in which they are dried at a temperature of 165°C for about 6 minutes. The dried pieces puff slightly due to steam release during hot air drying but retain the striated, meat-like appearance and have pH of 6.

The composition of the pieces after drying was determined to be as follows (weight %):
33% Protein
20% Fat
39% Moisture
2% sugars, in particular sucrose or glucose
4% ash

The dried pieces were then transferred to a coating apparatus. Water, food grade phosphoric acid , flavoring agents, and edible food grade vegetable oil (optional) were then coated on the pieces over a time of about 90 seconds, the phosphoric acid making up about 2.0% of the total mass of the coated product pieces, and the vegetable oil making up approximately 7% of the total mass. The coated pieces were found to have a moisture content of about 40% by weight and a pH of 4.5. The coated pieces had a firm yet resilient texture.

Finally, the pieces were packed in to a sealable can without any gravy or water being added. The can was sealed and retorted. After allowing it to cool to ambient temperature, the can was opened and the contents examined.

The dried and coated pieces were observed to have a randomised or at least non-uniform browned surface, appearing more charred than after the earlier pre-canning drying stage. The pieces had a very slight oily feel and, on being lightly pressed, exuded fatty juices.

### Example 3

Pieces were produced from a starting formulation and using the process as described in example 1. However, drying was carried out in a hot air dryer as described in example 2 and conditions were adjusted to provide final dried pieces with a moisture content of 28%. In this case, drying time was about 10 minutes with mean dryer temperature at about 178°C. The dried pieces retain their predrying striated, meat-like appearance and have pH of 6. They had a slightly oily feel. Approximate average dimensions of the pieces were length and width 10mm and depth 20mm.

### Example 4

Pieces were produced from a starting formulation and using the process as described in example 2. However, the drying conditions were adjusted to provide final dried pieces with a moisture content of 53%. In this case, drying time was about 4 minutes with mean dryer temperature at about 147°C. The resultant dried pieces and a very slightly greasy feel and average dimensions of 15mm by 12mm by 25mm. They were packaged and sealed in a retortable plastic pouch without adding further moisture or oil. When viewed through the transparent package material a week later, oiliness was visible on the pieces.

## Claims

1. A pet food comprising an edible, formulated, thermally gelled body comprising at least 20% protein by weight having a seared appearance, a moisture content of 20% to 60% by weight, a lipid content of 15% to 25% by weight and a structure providing firmness of texture to be resilient under initial pressure of biting by a pet animal, wherein the body is capable of exuding a fatty juice when subjected to light pressure.

2. A pet food according to claim 1 wherein the body has a non-uniform surface.

3. A pet food according to claim 1 or claim 2 wherein the body has high palatability, attributable to a browning reaction.

4. A pet food according to any one of the preceding claims wherein the structure is layered.

5. A pet food according to any one of the preceding claims wherein the moisture content is from 35% to 50% by weight.

6. A pet food according to claim 5 wherein the moisture content is from 40% to 45% by weight.

7. A pet food according to any one of the preceding claims having a generally blocky shape.

8. A pet food according to any one of the preceding claims wherein the structure comprises interior and exterior zones, the exterior zone having lower moisture content than the interior zone.

9. A pet food according to claim 8 wherein the exterior zone comprises an acidic coating.

10. A pet food according to any one of the preceding claims comprising from 20% to 40% weight protein.

11. A process for producing a pet food having a texture that is resilient under initial pressure of biting by a pet animal, including the steps of providing a coherent body of food produced from a thermally gellable protein source, reducing moisture content of the body to between 20% and 50% by weight, causing at least a portion of the body to have a seared-looking surface and reducing the pH of the body, wherein after reduction of the moisture content the body comprises at least 20% protein by weight.

12. A process according to claim 11 wherein the step of reducing moisture is preferably accomplished by exposing the body to dry heat.

13. A process according to claim 12 including charring at least said surface portion.

14. A process according to any one of claims 11 to 13 including enhancing the palatability of the body.

15. A process according to claim 14 wherein enhancing the palatability includes causing a browning reaction to take place at the surface of the body.

16. A process according to any one of claims 11 to 15 including coating the body with an acid.

17. A process according to any one of claims 11 to 16 comprising including a sugar in the body.

18. A process according to any one of claims 11 to 17 comprising forming a meat emulsion.

19. A pet food product comprising a sealed container, a plurality of edible, formulated, thermally gelled bodies within the container, said bodies comprising at least 20% protein by weight, having a browned appearance, a moisture content of 20% to 60% by weight, a lipid content of 15% to 25% by weight and a structure providing firmness of texture to be resilient under initial pressure of biting by a pet animal.

20. A pet food product according to claim 19 wherein the browned appearance is produced by exposure of the body to a source of dry heat.

21. A pet food product according to claim 19 or claim 20 wherein the bodies are tightly contained in said container.

22. A pet food product according to any one of claims 19 to 21 containing no added water or gravy.

23. A pet food product according to any one of claims 19 to 22 wherein the bodies have an acidic coating.

24. A pet food product according to claim 19 having a moisture content of 30% to 45% by weight, the moisture having been reduced by exposure of the body to a source of dry heat, and a protein content of 20% to 40% by weight and wherein, the bodies have an acidic coating with a seared appearance.

25. A pet food product according to claim 19 comprising a moisture content of 35% to 50% by weight, the moisture having been reduced by exposure of the bodies to a source of dry heat and a protein content of 20% to 40% by weight, the bodies being capable of exuding fatty juice when subjected to light pressure.

## Patentansprüche

1. Haustierfutter, welches einen essbaren, formulierten und thermisch gelierten Körper enthält, welcher umfasst, mindestens 20 Gew.-% Protein mit einem ausgetrockneten Erscheinungsbild, einem Feuchtigkeitsgehalt von 20 % bis 60 Gew.-%, einen Lipidgehalt von 15 % bis 25 Gew.-% und einer Struktur, welche der Textur eine Festigkeit verleiht, so dass sie unter dem anfänglichen Druck eines Bisses durch ein Haustier federnd ist, worin der Körper fettigen Saft absondern kann, wenn er einem leichten Druck ausgesetzt wird.

2. Haustierfutter nach Anspruch 1, worin der Körper eine nicht einheitliche Fläche aufweist.

3. Haustierfutter nach Anspruch 1 oder Anspruch 2, worin der Körper eine hohe Schmackhaftigkeit aufweist, welche auf eine Bräunungsreaktion zurückgeht.

4. Haustierfutter nach einem der vorhergehenden Ansprüche, worin die Struktur geschichtet ist.

5. Haustierfutter nach einem der vorhergehenden Ansprüche, worin der Feuchtigkeitsgehalt von 35 % bis 50 Gew.-% beträgt.

6. Haustierfutter nach Anspruch 5, worin der Feuchtigkeitsgehalt von 40 % bis 45 Gew.-% beträgt.

7. Haustierfutter nach einem der vorhergehenden Ansprüche, welches eine im Wesentlichen blockartige Form aufweist.

8. Haustierfutter nach einem der vorhergehenden Ansprüche, worin die Struktur innere und äußere Bereiche umfasst, wobei der äußere Bereich einen geringeren Feuchtigkeitsgehalt als der innere Bereich aufweist.

9. Haustierfutter nach Anspruch 8, worin der äußere Bereich eine saure Beschichtung umfasst.

10. Haustierfutter nach einem der vorhergehenden Ansprüche, welches von 20 % bis 40 Gew.-% Protein enthält.

11. Verfahren zur Herstellung eines Haustierfutters mit einer Textur, welche bei anfänglichem Druck eines Bisses durch ein Haustier federnd ist, umfassend die Schritte von, Bereitstellen eines kohärenten Körpers aus Nehrungsmittel, welches aus einer thermisch gelierbaren Proteinquelle erzeugt wurde, Verringern des Feuchtigkeitsgehaltes des Körpers auf zwischen 20 % und 50 Gew.-%, Bewirken, dass mindestens ein Bereich des Körpers eine ausgetrocknet erscheinende Oberfläche aufweist, und Verringern des pH-Wertes des Körpers, wobei nach Verringern des Feuchtigkeitsgehaltes der Körper mindestens 20 Gew.-% Protein enthält.

12. Verfahren nach Anspruch 11, wobei der Schritt des Verringerns der Feuchtigkeit vorzugsweise durch Aussetzten des Körpers an trockene Hitze durchgeführt wird.

13. Verfahren nach Anspruch 12, umfassend, Ankohlen von mindestens dem Oberflächenbereich.

14. Verfahren nach einem der Ansprüche 11 bis 13, umfassend, Erhöhen der Schmackhaftigkeit des Körpers.

15. Verfahren nach Anspruch 14, wobei die Verstärkung der Schmackhaftigkeit Durchführen einer Bräunungs-Reaktion an der Oberfläche des Körpers umfasst.

16. Verfahren nach einem der Ansprüche 11 bis 15, umfassend, Beschichten des Körpers mit einer Säure.

17. Verfahren nach einem der Ansprüche 11 bis 16, welches Einbringen eines Zuckers in den Körper umfasst.

18. Verfahren nach einem der Ansprüche 11 bis 17, welches Bilden einer FleischEmulsion umfasst.

19. Haustierfutter-Produkt, welches einen versiegelten Behälter umfasst, mehrere essbare, formulierte, thermisch gelierte Körper in dem Behälter, wobei die Körper mindestens 20 Gew.-% Protein enthalten, ein gebräuntes Erscheinungsbild aufweisen, einen Feuchtigkeitsgehalt von 20 % bis 60 Gew.-% aufweisen, einen Fettgehalt von 15 % bis 25 Gew.-% aufweisen und eine Struktur, welche einer Textur eine Festigkeit verleiht, so dass diese bei einem anfänglichen Druck eines Bisses durch das Haustier federnd ist.

20. Haustierfutter-Produkt nach Anspruch 19, worin das gebräunte Erscheinungsbild durch aussetzen des Körpers an eine Quelle trockener Hitze hergestellt wird.

21. Haustierfutter-Produkt nach Anspruch 19 oder Anspruch 20, worin die Körper in dem Behälter eng aneinander liegen.

22. Haustierfutter-Produkt nach einem der Ansprüche 19 bis 21, welches kein zugesetztes Wasser oder Bratensaft enthält.

23. Haustierfutter-Produkt nach einem der Ansprüche 19 bis 22, worin die Körper eine saure Beschichtung aufweisen.

24. Haustierfutter-Produkt nach Anspruch 19, mit einem Feuchtigkeitsgehalt von 30 % bis 45 Gew.-%, wobei die Feuchtigkeit durch Aussetzen des Körpers an eine Quelle trockener Hitze reduziert wurde, und einem Proteingehalt von 20 % bis 40 Gew.-%, und worin die Körper eine saure Beschichtung mit einem ausgedörrten Erscheinungsbild aufweisen.

25. Haustierfutter-Produkt nach Anspruch 19, welches einen Feuchtigkeitsgehalt von 35 % bis 50 Gew.-% aufweist, wobei die Feuchtigkeit durch Aussetzen der Körper an einer Quelle trockener Hitze reduziert wurde, und einen Proteingehalt von 20 % bis 40 Gew.-%, wobei die Körper fettigen Saft absondern können, wenn sie einem leichten Druck ausgesetzt werden.

## Revendications

1. Aliment pour animaux de compagnie comprenant un corps comestible, formulé, gélifié thermiquement, comprenant au moins 20 % en poids de protéines, ayant un aspect desséché, une teneur en humidité de 20 % à 60 % en poids, une teneur en lipides de 15 % à 25 % en poids et une structure conférant une fermeté de texture de façon à être élastique sous la pression initiale d'un animal de compagnie qui mord dedans, dans lequel le corps est capable d'exsuder un jus gras quand il est soumis à une pression légère.

2. Aliment pour animaux de compagnie selon la revendication 1, dans lequel le corps a une surface non uniforme.

3. Aliment pour animaux de compagnie selon la revendication 1 ou la revendication 2, dans lequel le corps a une grande sapidité pouvant être attribuée à une réaction de brunissement.

4. Aliment pour animaux de compagnie selon l'une quelconque des revendications précédentes, dans lequel la structure est stratifiée.

5. Aliment pour animaux de compagnie selon l'une quelconque des revendications précédentes, dans lequel la teneur en humidité est de 35 % à 50 % en poids.

6. Aliment pour animaux de compagnie selon la revendication 5, dans lequel la teneur en humidité est de 40 % à 45 % en poids.

7. Aliment pour animaux de compagnie selon l'une quelconque des revendications précédentes, ayant une forme globalement agglomérée.

8. Aliment pour animaux de compagnie selon l'une quelconque des revendications précédentes, dans lequel la structure comprend des zones intérieure et extérieure, la zone extérieure ayant une teneur en humidité inférieure à celle de la zone intérieure.

9. Aliment pour animaux de compagnie selon la revendication 8, dans lequel la zone extérieure comprend un revêtement acide.

10. Aliment pour animaux de compagnie selon l'une quelconque des revendications précédentes, comprenant de 20 % à 40 % en poids de protéines.

11. Procédé de préparation d'un aliment pour animaux de compagnie ayant une texture qui est élastique sous la pression initiale d'un animal de compagnie qui mord dedans, comprenant les étapes consistant à fournir un corps d'aliment cohérent produit à partir d'une source de protéines pouvant être gélifiées thermiquement, à réduire la teneur en humidité du corps entre 20 % et 50 % en poids, à obliger au moins une partie du corps à avoir une surface ayant un aspect desséché et à réduire le pH du corps, dans lequel, après la réduction de la teneur en humidité, le corps comprend au moins 20 % en poids de protéines.

12. Procédé selon la revendication 11, dans lequel l'étape consistant à réduire l'humidité est effectuée de préférence en exposant le corps à de la chaleur sèche.

13. Procédé selon la revendication 12, comprenant la carbonisation d'au moins ladite partie superficielle.

14. Procédé selon l'une quelconque des revendications 11 à 13, comprenant une augmentation de la sapidité du corps.

15. Procédé selon la revendication 14, dans lequel l'augmentation de la sapidité comprend l'étape consistant à provoquer une réaction de brunissement à la surface du corps.

16. Procédé selon l'une quelconque des revendications 11 à 15, comprenant le revêtement du corps avec un acide.

17. Procédé selon l'une quelconque des revendications 11 à 16, comprenant l'inclusion d'un sucre dans le corps.

18. Procédé selon l'une quelconque des revendications 11 à 17, comprenant la formation d'une émulsion de viande.

19. Produit alimentaire pour animaux de compagnie comprenant un conteneur scellé, une pluralité de corps comestibles formulés, gélifiés thermiquement à l'intérieur du conteneur, lesdits corps comprenant au moins 20 % en poids de protéines, ayant un aspect bruni, une teneur en humidité de 20 % à 60 % en poids, une teneur en lipides de 15 % à 25 % en poids et une structure conférant une fermeté de texture de façon à être élastique sous la pression initiale d'un animal de compagnie qui mord dedans.

20. Produit alimentaire pour animaux de compagnie selon la revendication 19, dans lequel l'aspect bruni est produit par exposition du corps à une source de chaleur sèche.

21. Produit alimentaire pour animaux de compagnie selon la revendication 19 ou la revendication 20, dans lequel les corps sont contenus de façon étanche dans ledit conteneur.

22. Produit alimentaire pour animaux de compagnie selon l'une quelconque des revendications 19 à 21, ne contenant pas d'eau ou de sauce ajoutée.

23. Produit alimentaire pour animaux de compagnie selon l'une quelconque des revendications 19 à 22, dans lequel les corps ont un revêtement acide.

24. Produit alimentaire pour animaux de compagnie selon la revendication 19, ayant une teneur en humidité de 30 % à 45 % en poids, l'humidité ayant été réduite par exposition du corps à une source de chaleur sèche, et une teneur en protéines de 20 % à 40 % en poids, et dans lequel les corps ont un revêtement acide avec un aspect desséché.

25. Produit alimentaire pour animaux de compagnie selon la revendication 19, comprenant une teneur en humidité de 35 % à 50 % en poids, l'humidité ayant été réduite par exposition des corps à une source de chaleur sèche, et une teneur en protéines de 20 % à 40 % en poids, les corps étant capables d'exsuder un jus gras quand ils sont soumis à une pression légère.
